# FASCICULE DE BREVET EUROPEEN

(11) **EP 2 088 286 B1**
(45) Date de publication et mention de la délivrance du brevet: **31.08.2016**
(21) Numéro de dépôt: 09152243.3
(22) Date de dépôt: 06.02.2009
(51) Int. Cl.: F01D 5/14

(54) **Aube, roue à aube et turbomachine associées**
Schaufel, zugehöriger beschaufelter Rotor und Strömungsmaschine
Blade, corresponding bladed rotor and turbomachine

(30) Priorité: 07.02.2008 FR 0850766
(43) Date de publication de la demande: 12.08.2009
(73) Titulaire: SNECMA, 75015 Paris (FR)
(72) Inventeur: Grohens, Régis, 77220 Tournan en Brie (FR); Royan, Renaud, 94370 Sucy en Brie (FR)
(74) Mandataire: Intès, Didier Gérard André

(56) Documents cités:
- WO-A-94/12765
- FR-A- 2 053 813
- US-A1- 2004 179 943
- US-A1- 2005 175 444
- US-A1- 2008 050 223
- US-A1- 2008 085 190

## Description

La présente invention concerne une aube pour roue à aubes de turbomachine, l'aube comportant un profilé aérodynamique présentant un intrados, et une plateforme s'étendant à l'une des extrémités du profilé dans une direction globalement perpendiculaire à une direction longitudinale du profilé, la plateforme comportant au moins un passage d'injection d'air, et plus précisément les moyens à mettre en oeuvre pour optimiser le refroidissement de l'aube grâce au flux injecté par le ou les passage(s) d'injection d'air.

De manière connue en soi, une telle aube est prévue généralement pour être disposée avec une pluralité d'aubes sensiblement identiques pour former une couronne autour d'un axe de couronne, couronne dans laquelle les profilés aérodynamiques sont disposés sensiblement radialement, et les portions des surfaces de plateforme de deux aubes adjacentes situées entre leurs profilés respectifs définissent une surface inter-profilés. Cette surface inter-profilés relie l'intrados d'un profilé à l'extrados du profilé voisin dans le canal inter-profilés.

La réunion des aubes autour de l'axe de couronne permet de constituer une roue à aubes. Cette roue à aubes peut être mobile et ainsi recevoir une énergie venant du flux ou communiquer une énergie au flux circulant à travers la roue à aube ; elle peut également être fixe, et dans ce cas là, son rôle est de canaliser le flux.

La présente invention vise des aubes mises en oeuvre dans des flux de température élevée, et notamment de température très élevée comme par exemple plus de 1000 K. C'est le cas, par exemple, d'aubes disposées dans les étages de turbines haute ou basse pression de turboréacteurs, disposés en aval des chambres de combustion de ceux-ci.

Ces hautes températures (et les gradients de température associés), qui parfois peuvent être supérieures à la température de fusion de l'aube, engendrent différents problèmes pour les aubes : Risque de fusion, dilatations, déformations, apparitions de contraintes mécaniques, ...

De manière connue, le refroidissement des profilés aérodynamiques et des plateformes des aubes ainsi sollicitées est réalisé au moyen de passages d'air aménagés dans le volume même des aubes. Ces passages acheminent des flux de refroidissement vers les parties des aubes soumises aux contraintes thermiques ou thermomécaniques les plus fortes.

Le bord de fuite du profilé aérodynamique, et plus particulièrement la partie de raccordement du bord de fuite du profilé avec la surface de plateforme de l'aube, qui est très sollicitée mécaniquement, fait partie des parties particulièrement exposées de l'aube et est appelé la partie critique de l'aube.

En effet, la forme et l'emplacement de cette partie de l'aube rendent son refroidissement par un flux d'air particulièrement difficile à assurer. Pour cette raison, en pratique le refroidissement de cette partie critique est mal assuré et des températures élevées y sont atteintes, en même temps que des niveaux de contraintes élevés. Tout cela entraine des déformations et à terme des fissures, et ainsi une réduction de la durée de vie de l'aube.

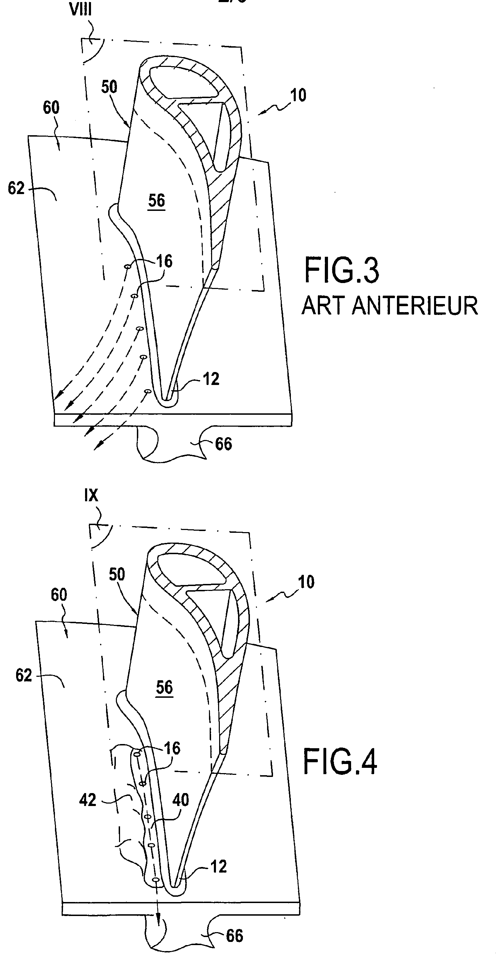

La difficulté indiquée précédemment qu'il y a à refroidir le bord de fuite de l'aube par l'injection d'un flux d'air, est illustrée en particulier par la figure 3.

Cette figure 3 représente la coupe d'une aube du type cité en préambule et fait apparaître le comportement des flux de refroidissement injectés par des passages d'injection d'air situés au voisinage du profilé aérodynamique de l'aube, du côté de l'intrados.

L'aube présentée en figure 3 est une aube 10 comportant un profilé aérodynamique 50, une plateforme 60, un pied 66. Cette aube est présentée suivant une coupe perpendiculaire à l'axe longitudinal du profilé aérodynamique 50.

Des passages d'air 16 sont formés dans la plateforme 60. Ils servent à convoyer un air de refroidissement, qui est injecté notamment pour refroidir la partie critique du profilé. Ces passages 16 sont ouverts à travers la plateforme de l'aube et débouchent dans la surface de plateforme 62, le long de l'intrados 56 de l'aube 10.

On notera que dans ce document, le terme 'air' est un terme générique, pouvant désigner un flux d'air ou tout autre flux essentiellement gazeux, comme par exemple des gaz d'échappement.

La figure 3 met en évidence la trajectoire des flux d'air injectés par les passages 16 d'injection d'air. Ces flux ne longent pas la paroi d'intrados 56, mais se décollent rapidement de celle-ci pour se diriger en oblique vers l'aval et partiellement en direction de l'extrados 58 du profilé 50 voisin.

Du fait de cette trajectoire oblique, ces flux ne contribuent que peu au refroidissement de la partie 12 de raccordement du bord de fuite à la plateforme. Seuls les flux de refroidissement acheminés par les passages 16 situés le plus en aval du profilé 50 contribuent quelque peu au refroidissement, quoique imparfaitement, de cette partie critique 12 de l'aube 10. Les flux de refroidissement acheminés par les autres passages 16 s'écartent de l'intrados 56 du profilé et ne contribuent pas significativement au refroidissement de la partie critique 12 de l'aube.

D'autres types d'aubes comportant des passages à injection d'air pour leur refroidissement sont connus par les documents US 2004/179943 et FR 2 053 813.

Un premier objet de l'invention est de proposer une aube du type cité en préambule, qui soit apte à être mise en oeuvre dans un flux de température élevée, qui reste de coût de revient faible en étant relativement facile à fabriquer, et dont la partie critique soit convenablement refroidie.

Cet objectif est atteint grâce au fait que dans l'aube, la plateforme comporte une rainure longeant l'intrados au voisinage au moins d'une partie aval de celui-ci, au moins un passage d'injection d'air étant aménagé dans cette rainure.

La rainure citée ci-dessus constitue un canal, dans lequel est injecté le flux d'air par le ou les passages d'injection d'air disposés dans la rainure. Le flux d'air injecté est guidé par les parois de la rainure le long de l'intrados. Grâce à cela, le phénomène de décollement du flux par rapport à la paroi d'intrados est évité, et un refroidissement efficace de la partie de raccordement du bord de fuite à la plateforme est assuré.

Ainsi, la température en fonctionnement de la partie critique de l'aube est abaissée. Pour cette raison, la durée de vie de celle-ci est augmentée. On peut inversement profiter de l'amélioration du rendement du refroidissement, pour diminuer la quantité d'air injectée par le ou les passages d'air, ou réduire le nombre de ceux-ci.

On note en outre que ce résultat est simplement obtenu grâce à une forme spécifique de la plateforme de l'aube, donc avantageusement avec un surcoût extrêmement faible (voire négatif en cas de réduction du nombre de passages d'injection d'air) de l'aube.

En général, comme la rainure est formée dans la plateforme, l'ouverture de la rainure est dirigée sensiblement dans la direction radiale, vers l'extérieur de la roue à aube, et donc sensiblement parallèlement à l'axe de l'aube. Ainsi, le ou les passages d'injection d'air, au point où ils débouchent dans la rainure, ne sont pas dirigés dans la direction sensiblement perpendiculaire sortante par rapport à la paroi d'intrados de l'aube. Ils peuvent notamment être dirigés de manière à former un angle d'au moins 45°, et de préférence près de 90°, et notamment supérieur à 90°, par rapport à cette dernière direction.

Dans un mode de réalisation, le diamètre des trous d'injection d'air est petit par rapport aux dimensions de la section de la rainure dans un plan perpendiculaire à la direction générale de cette dernière.

D'autre part, l'invention peut être réalisée suivant l'un des deux modes de réalisation exposés ci-dessous, ainsi que suivant tout mode de réalisation intermédiaire entre ces derniers :

Selon un premier mode de réalisation, la surface de plateforme au voisinage d'une partie aval de l'intrados est sensiblement une surface de révolution par rapport à l'axe de couronne, et la rainure est aménagée en dépression par rapport à cette surface.

Selon un second mode de réalisation, la rainure est formée entre l'intrados et une nervure aménagée sur la surface de plateforme à une faible distance de ladite partie aval de l'intrados. Cette nervure est donc aménagée en saillie par rapport à la surface environnante de la plateforme, et ainsi, la rainure n'est pas formée en dépression par rapport à la surface de la plateforme.

Par 'une faible distance', on désigne ici une distance qui soit une petite partie de la largeur du canal inter-profilés. Il convient par exemple que la nervure ne soit pas éloignée de l'intrados de plus que le tiers de la largeur du canal inter-profilés, et de préférence pas plus du quart de la largeur du canal inter-profilés.

D'autre part, de préférence la nervure est aménagée à une distance sensiblement constante de l'intrados, de manière à ce que la rainure définisse un canal de section globalement constante.

Ainsi de manière générale, la rainure peut se trouver soit en creux, soit sensiblement de même niveau (voire également en saillie), par rapport à la surface avoisinante de la plateforme, ces deux cas correspondant respectivement aux deux modes de réalisation indiqués précédemment. Dans le cas de l'aménagement d'une rainure de même niveau que la surface de plateforme, cela nécessite donc de réaliser une nervure en saillie sur la plateforme, la rainure étant ainsi formée entre la nervure et la paroi d'intrados.

Selon un perfectionnement de ce second mode de réalisation, la rainure est délimitée d'un côté par l'intrados et de l'autre côté par la nervure. L'effet de la rainure est ainsi renforcé.

En ce qui concerne l'extension de la rainure suivant le sens d'écoulement du flux, selon un mode de réalisation avantageux la rainure s'étend par rapport à la fibre neutre du profilé, entre le premier quart de celle-ci et le point le plus aval du profilé. Il a été observé qu'une rainure s'étendant dans un tel intervalle s'avère particulièrement efficace.

Enfin, selon un mode de réalisation l'aube comporte de multiples passages d'injection d'air, répartis au long de la rainure. La présence de passages d'air multiples réduit le risque de turbulences qui pourraient être générées par un afflux d'air massif, injecté par un passage d'air unique. Dans ce cas en particulier, la section de la rainure peut être croissante dans le sens de l'amont vers l'aval, de manière à permettre le passage d'un flux d'air de débit croissant injecté progressivement par les différents passages d'injection d'air.

Un second objet de l'invention est de proposer une roue à aubes apte à être mise en oeuvre dans un flux de température élevée, et dont le coût de revient reste modéré.

Cet objectif est atteint grâce au fait que la roue à aubes comporte une pluralité d'aubes telles que celles définies précédemment.

Un troisième objet de l'invention est de proposer une turbomachine de rendement élevé, et dont le coût de revient reste modéré. Cet objectif est atteint grâce au fait que la turbomachine comprend au moins une roue à aubes telle que celle définie précédemment. On notera que cette roue à aube peut aussi bien être une roue mobile, qu'une roue à aubes fixes telle qu'un distributeur haute pression dans un turboréacteur.

L'invention sera bien comprise et ses avantages apparaîtront mieux à la lecture de la description détaillée qui suit, de modes de réalisation représentés à titre d'exemples non limitatifs. La description se réfère aux dessins annexés, sur lesquels :
- la figure 1 est une vue en perspective de trois aubes connues disposées dans leur position relative lorsqu'elles sont montées dans une roue à aubes,
- la figure 2 est une vue en perspective schématique de la roue à aubes comprenant les aubes de la figure 1,
- la figure 3 déjà décrite et la figure 4 sont des vues en perspective d'une aube au voisinage du bord de fuite de son profilé aérodynamique et du côté de l'intrados de celui-ci, faisant apparaître la trajectoire du flux injecté par des passages d'injection d'air, respectivement dans le cas d'une aube connue et dans le cas d'une aube selon l'invention,
- les figures 5, 6 et 7 sont des vues en coupe d'une aube selon l'invention, selon trois modes de réalisation différents,
- les figures 8 et 9 sont des vues du canal inter-profilés entre deux profilés aérodynamiques au voisinage du bord de fuite d'un profilé aérodynamique et du côté de l'intrados de celle-ci, selon les deux modes de réalisation respectivement des figures 5 et 6.

Par souci de simplification, lorsqu'un élément apparaît sur différentes figures, à l'identique ou sous une forme analogue, un même numéro lui est attribué sur les différentes figures et l'élément n'est décrit que la première fois où il est mentionné.

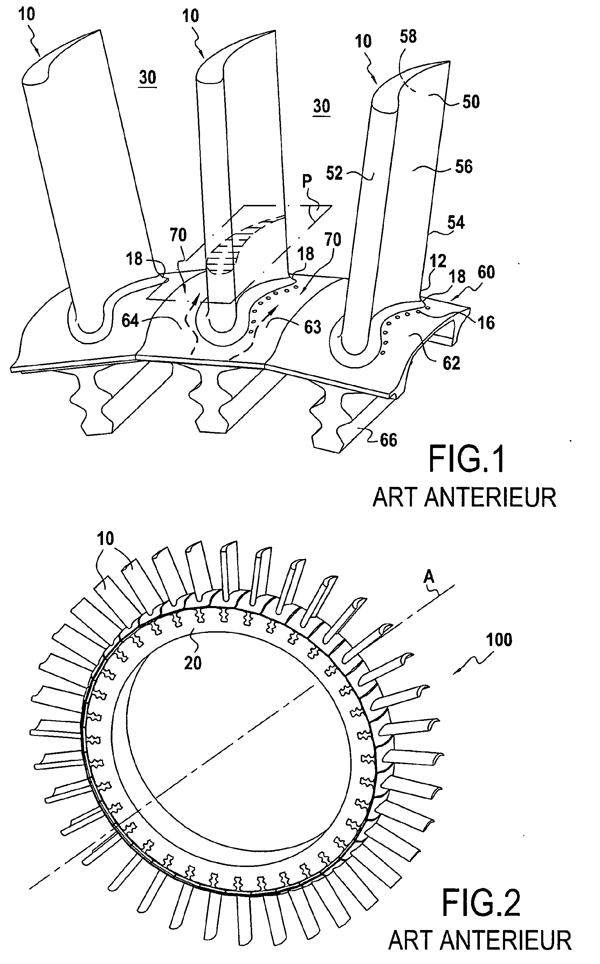

En faisant référence aux figures 1 et 2, la forme générale d'aubes pour roue à aubes de turbomachine va maintenant être rappelée.

La figure 1 fait apparaître trois aubes 10 identiques faisant partie d'une roue à aubes 100 présentée en figure 2. Chaque aube 10 est conçue pour être assemblée avec d'autres aubes 10 identiques, pour former la roue à aubes 100. Cette roue est constituée essentiellement par les aubes 10 montées sur un disque rotor 20. Dans cette roue à aube 100, les aubes 10 sont disposées en couronne de manière axisymétrique autour de l'axe A de la roue.

Chaque aube 10 comporte un profilé aérodynamique 50, une plate-forme 60 et un pied 66. Le profilé aérodynamique comporte un bord d'attaque 52, un bord de fuite 54, un intrados 56, un extrados 58. Le pied 66 sert à la fixation de l'aube sur un moyeu, par exemple le disque rotor 20. La plate-forme 60 s'étend dans une direction globalement perpendiculaire à la direction longitudinale du profilé 50 et comporte une surface supérieure 62 du côté du profilé 50. Comme les aubes 10 sont assemblées les unes contre les autres, les surfaces supérieures 62 de leurs plateformes définissent des surfaces inter-profilés 70 qui s'étendent de l'intrados 56 d'un profilé aérodynamique à l'extrados 58 du profilé voisin. Dans la roue à aube 100, chaque surface inter-profilés 70 est formée par une première partie 63 de la surface supérieure de la plateforme située du côté d'intrados du profilé, et une deuxième partie 64 de la surface supérieure de la plateforme située du côté d'extrados du profilé. Ces deux parties 63, 64 sont situées en continuité l'une de l'autre de manière à assurer une jonction sensiblement étanche entre deux aubes 10 adjacentes. La surface de plateforme 62 est reliée aux surfaces extérieures du profilé 50 par des surfaces de raccordement 18 (qui sont sensiblement des congés de raccordement à rayon évolutif).

En outre, pour le refroidissement de la zone critique 12 du profilé 50, c'est-à-dire la partie du bord de fuite 54 située au voisinage de la plateforme 60, la surface de plateforme 62 comporte des passages 16 d'injection d'air aménagés dans le volume même de l'aube.

On notera de plus que dans les exemples représentés sur les figures 1 à 3, la surfaces inter-profilés 70 est de révolution, c'est-à-dire que sa surface est une partie d'une surface sensiblement de révolution, autour de l'axe A de la roue à aube (On désigne ici par surface de révolution, une surface engendrée par la rotation d'une courbe autour d'un axe). Une telle forme est usuelle pour des surfaces inter-profilés d'aubes pour roues à aubes de turbomachines.

En faisant référence aux figures 3 et 4, l'effet produit par une aube selon l'invention va maintenant être détaillé.

Dans l'aube présentée en figure 4, une nervure 42 est aménagée à une distance, sensiblement constante, de l'intrados 56 du profilé 50. Du fait de cette nervure 42, une rainure 40 est formée dans la surface de plateforme 62. Cette rainure 40 longe l'intrados 56 du profilé dans sa partie aval et s'étend entre l'intrados 56 et la nervure 42, qui la délimitent.

Grâce à cette rainure 40, le flux d'air injecté via les passages 16 d'injection d'air prévus au fond de la rainure est canalisé suivant la rainure et longe donc l'intrados 56, permettant ainsi un refroidissement efficace de la partie critique 12 de l'aube. A l'inverse, en l'absence d'une telle rainure 40, comme le montre la figure 3, le flux d'air de refroidissement injecté tend dès son injection à s'écarter de l'intrados 56. Il ne peut donc agir efficacement pour le refroidissement de la partie critique 12 de l'aube, c'est-à-dire la jonction entre son bord de fuite 54 et la surface de plateforme 62.

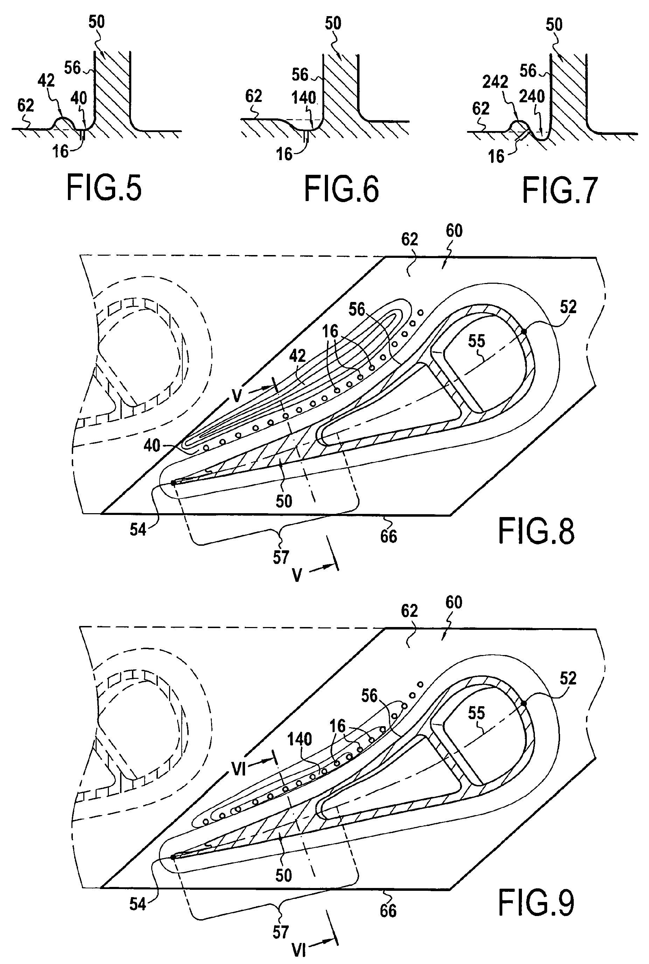

En faisant référence aux figures 5 et 8 d'une part, 6 et 9 d'autre part, 7 enfin, trois modes de réalisation de l'invention vont maintenant être décrits.

Les figures 5 à 7 représentent des coupes d'aubes selon l'invention, ces coupes étant faites suivant l'axe du profilé et dans une direction sensiblement perpendiculaire à la direction générale d'écoulement du flux. Les figures 8 et 9 font apparaître le plan de coupe (qui est le même pour les trois figures 5 à 7) pour les figures 5 et 6 avec les références V et VI.

Dans les figures 5 à 7, la courbe en pointillés représente la coupe de la surface de révolution moyenne qui approxime la partie de la surface de plateforme 62 située au voisinage de la rainure 40.

Sur la figure 5 est représentée la coupe de l'aube de la figure 4. La nervure 42 est aménagée en saillie par ajout de matière par rapport à la surface de plateforme 62. Du fait de la présence de cette nervure 42, la rainure 40 est formée entre la nervure 42 et l'intrados 56. Dans le cas représenté la nervure 42 est dans le voisinage immédiat de l'intrados, pour canaliser le flux d'air injecté le plus près possible de celui-ci. Le flux d'air est injecté par un passage 16 d'injection d'air qui est au fond de la rainure 40.

La figure 6 présente une aube, dans laquelle la rainure 140 est aménagée en creux, en dépression par rapport à la forme générale de la surface de plateforme 62, représentée en pointillés. Dans ce cas, il n'y a pas de nervure.

La figure 7 présente une aube dans un mode de réalisation intermédiaire entre les deux modes de réalisation des figures 5 et 6. La rainure 240 est aménagée en dépression par rapport à la forme générale de la surface de plateforme 62 ; mais l'effet de la rainure pour guider et canaliser le flux d'air injecté est augmenté par la nervure 242 formée en saillie par rapport à la forme générale de la surface de plateforme 62.

Dans ce mode de réalisation, le passage d'injection d'air 16 débouche dans la paroi de la nervure 242 située du côté de l'intrados 56, et est dirigé vers l'intrados, pour diriger le flux d'air injecté en direction de celui-ci.

Les figures 8 et 9 sont des coupes réalisées perpendiculairement à l'axe du profilé 50 des aubes déjà présentées par les figures 5 et 6. Ces coupes font apparaître la section du profilé 50 au voisinage de la plateforme 60 de l'aube, du côté du flux, à une distance de la plateforme suffisante pour que la section soit bien celle du profilé sans faire apparaître les surfaces de raccordement 18 entre le profilé 50 et la plateforme 60.

Dans les deux modes de réalisation présentés, une rainure 40, 140 est aménagée le long de l'intrados 56.

L'extension de la rainure 40,140 peut d'abord être évaluée dans le sens de l'écoulement du flux. On peut notamment la quantifier par rapport à la fibre neutre 55 du profilé, qui s'étend du bord d'attaque 52 au bord de fuite 54 de celui-ci, à distance sensiblement égale des deux côtés du profilé : la rainure s'étend par rapport à la fibre neutre 55 du profilé, entre le premier quart de celle-ci et le point le plus aval du profilé (dans le sens de l'amont vers l'aval, c'est-à-dire sur les figures, d'une position située en haut à droite, vers une position située en bas à gauche). En particulier, la rainure s'étend au moins au niveau d'une partie aval 57 de l'intrados 56.

Cette partie aval correspond sensiblement à 40% de la fibre neutre 55 du profilé, du côté aval.

En outre, comme on le voit sur les figures 5 à 7, la rainure 40,140,240 s'étend à distance sensiblement constante de l'intrados 56, à proximité immédiate de celui-ci. En coupe, elle présente une forme sensiblement d'un arc ou d'un demi-cercle. Cet arc ou ce demi-cercle est relié sur un côté, à la paroi d'intrados du profilé. Sur l'autre côté, il est relié via une surface de raccordement (qui comprend la surface de la nervure 42, 242 sur les aubes des figures 5 et 7) à la surface de plateforme 62.

Dans les modes de réalisation représentés, la surface de plateforme 62 au voisinage de la rainure (en excluant la nervure s'il y en a une) est une surface très faiblement galbée, dont la forme est sensiblement une forme de révolution.

Enfin, dans les modes de réalisation présentés par les figures 8 et 9, de nombreux passages d'injection d'air 16 sont prévus le long de la rainure 40,140 pour convoyer un air de refroidissement jusqu'au canal inter-profilés, et ainsi permettre le refroidissement des aubes.

Ces passages 16 d'injection d'air sont disposés sensiblement en ligne, les uns à la suite des autres, à faible distance de la paroi de l'intrados 56.

Par rapport à la fibre neutre 55 du profilé, ils s'étendent sur la plus grande partie de celle-ci : le premier passage d'injection d'air est situé à environ 20% de la fibre neutre, en partant du bord d'attaque 52, tandis que le dernier passage 16 d'injection d'air est situé à environ 90% de la fibre neutre 55. Comme le présentent les figures 8 et 9, les passages d'injection d'air peuvent être répartis sur une amplitude, par rapport à la fibre neutre du profilé 50, qui excède celle de la rainure 40, 140.

## Revendications

1. Aube (10) pour roue à aubes (100) de turbomachine, l'aube comportant un profilé aérodynamique (50) présentant un intrados (56), et une plateforme (60) s'étendant à l'une des extrémités du profilé (50) dans une direction globalement perpendiculaire à une direction longitudinale du profilé, la plateforme comportant au moins un passage d'injection d'air (16), ladite aube (10) étant **caractérisée en ce que** la plateforme (60) comporte une rainure (40,140,240) longeant l'intrados (56) au voisinage au moins d'une partie aval (57) de celui-ci, ledit au moins un passage d'injection d'air (16) étant aménagé dans cette rainure.

2. Aube selon la revendication 1, dans laquelle l'aube (10) est apte à être disposée avec une pluralité d'aubes sensiblement identiques pour former une couronne autour d'un axe de couronne (A), dans laquelle les profilés (50) sont disposés sensiblement radialement, la surface de plateforme (62) au voisinage d'une partie aval de l'intrados (56) est sensiblement une surface de révolution par rapport à l'axe de couronne, et la rainure est aménagée en dépression par rapport à cette surface.

3. Aube selon la revendication 1 ou 2, dans laquelle la rainure (40, 240) est formée entre l'intrados (56) et une nervure (42, 242) aménagée sur la surface de plateforme (62) à une faible distance de ladite partie aval (57) de l'intrados.

4. Aube selon la revendication 3, dans laquelle la rainure (40) est délimitée d'un côté par l'intrados (56) et de l'autre côté par la nervure (42).

5. Aube selon l'une quelconque des revendications 1 à 4, dans laquelle la rainure (40,140) s'étend par rapport à la fibre neutre (55) du profilé, entre le premier quart de celle-ci et le point le plus aval du profilé.

6. Aube selon l'une quelconque des revendications 1 à 5, comportant de multiples passages d'injection d'air (16), répartis au long de la rainure (40,140).

7. Roue à aubes comportant une pluralité d'aubes selon l'une quelconque des revendications 1 à 6.

8. Turbomachine comportant au moins une roue à aubes suivant la revendication 7.

## Patentansprüche

1. Schaufel (10) für ein Schaufelrad (100) einer Turbomaschine, wobei die Schaufel ein aerodynamisches Profil (50), das eine Vorderseite (56) aufweist, und eine Plattform (60), die sich an einem der Enden des Profils (50) in einer zu einer Längsrichtung des Profils allgemein senkrechten Richtung erstreckt, umfasst, wobei die Plattform wenigstens einen Lufteinblasdurchgang (16) umfasst, wobei die Schaufel (10) **dadurch gekennzeichnet ist, dass** die Plattform (60) eine Nut (40, 140, 240), welche an der Vorderseite (56) in der Nähe wenigstens eines stromabwärtigen Teils (57) derer entlangläuft, umfasst, wobei der wenigstens eine Lufteinblasdurchgang (16) in dieser Nut ausgebildet ist.

2. Schaufel nach Anspruch 1, wobei die Schaufel (10) geeignet ist, mit einer Vielzahl von im Wesentlichen identischen Schaufeln angeordnet zu werden, um einen Kranz um eine Kranzachse (A) herum zu bilden, bei dem die Profile (50) im Wesentlichen radial angeordnet sind, die Plattformoberfläche (62) in der Nähe eines stromabwärtigen Teils der Vorderseite (56) im Wesentlichen eine Rotationsfläche in Bezug auf die Kranzachse ist und die Nut gegenüber dieser Oberfläche vertieft angeordnet ist.

3. Schaufel nach Anspruch 1 oder 2, bei der die Nut (40, 240) zwischen der Vorderseite (56) und einer Rippe (42, 242), welche auf der Plattformoberfläche (62) in einem geringen Abstand von dem stromabwärtigen Teil (57) der Vorderseite angeordnet ist, gebildet ist.

4. Schaufel nach Anspruch 3, bei der die Nut (40) auf der einen Seite durch die Vorderseite (56) und auf der anderen Seite durch die Rippe (42) begrenzt ist.

5. Schaufel nach einem der Ansprüche 1 bis 4, bei der die Nut (40, 140) sich in Bezug auf die neutrale Faser (55) des Profils zwischen dem ersten Viertel derer und der am weitesten stromab gelegenen Stelle des Profils erstreckt.

6. Schaufel nach einem der Ansprüche 1 bis 5, umfassend mehrere Lufteinblasdurchgänge (16), die entlang der Nut (40, 140) verteilt sind.

7. Schaufelrad, das eine Vielzahl von Schaufeln nach einem der Ansprüche 1 bis 6 umfasst.

8. Turbomaschine, die wenigstens ein Schaufelrad nach Anspruch 7 umfasst.

## Claims

1. A blade (10) for a turbomachine bladed wheel (100), the blade comprising an airfoil (50) having a pressure side (56) and a platform (60) extending from one of the ends of the airfoil (50) in a direction that is generally perpendicular to a longitudinal direction of the airfoil, the platform including at least one air injection passage (16), said blade (10) being **characterized in that** the platform (60) includes a groove (40, 140, 240) running along the pressure side (56) in the vicinity at least of a downstream portion (57) thereof, said at least one air injection passage (16) being formed in said groove.

2. A blade according to claim 1, wherein the blade (10) is suitable for being placed together with a plurality of substantially identical blades to form a ring around a ring axis (A) in which the airfoils (50) are disposed substantially radially, the platform surface (62) in the vicinity of a downstream portion of the pressure side (56) is substantially a surface of revolution about the axis of the ring, and the groove is formed as a depression relative to said surface.

3. A blade according to claim 1 or 2, wherein the groove (40, 240) is formed between the pressure side (56) and a rib (42, 242) formed on the platform surface (62) at a short distance from said downstream portion (57) of the pressure side.

4. A blade according to claim 3, wherein the groove (40) is defined on one side by the pressure side (56) and on the other side by the rib (42).

5. A blade according to any one of claims 1 to 4, wherein the grove (40, 140) extends relative to the neutral fiber (55) of the airfoil from the first quarter thereof to the point of the airfoil that is furthest downstream.

6. A blade according to any one of claims 1 to 5, having multiple air injection passages (16) distributed along the groove (40, 140).

7. A bladed wheel including a plurality of blades according to any one of claims 1 to 6.

8. A turbomachine including at least one bladed wheel according to claim 7.
